# EUROPÄISCHE PATENTSCHRIFT

(11) **EP 2 979 907 B1**
(45) Veröffentlichungstag und Bekanntmachung des Hinweises auf die Patenterteilung: **25.09.2019**
(21) Anmeldenummer: 15177898.2
(22) Anmeldetag: 22.07.2015
(51) Int. Cl.: B60J 1/20

(54) **BESCHATTUNGSVORRICHTUNG FÜR EINE HECKSCHEIBENANORDNUNG EINES KRAFTFAHRZEUGS**
SHADING DEVICE FOR A REAR WINDOW STRUCTURE OF A MOTOR VEHICLE
DISPOSITIF D'OMBRAGE POUR UN SYSTEME DE LUNETTE ARRIERE D'UN VEHICULE AUTOMOBILE

(30) Priorität: 01.08.2014 DE 102014215154
(43) Veröffentlichungstag der Anmeldung: 03.02.2016
(73) Patentinhaber: BOS GmbH & Co. KG, 73760 Ostfildern (DE)
(72) Erfinder: Maier, Matthias, 73733 Esslingen (DE)
(74) Vertreter: Patentanwälte Ruff, Wilhelm, Beier, Dauster & Partner mbB

(56) Entgegenhaltungen:
- EP-A1- 2 620 304
- EP-A2- 2 522 535
- DE-A1- 3 415 930
- DE-B4-102007 058 262
- JP-A- 2010 215 137

## Beschreibung

Die Erfindung betrifft eine Beschattungsvorrichtung für eine Heckscheibenanordnung eines Kraftfahrzeugs mit einem Beschattungsgebilde, das zwischen einer kompakt abgelegten Ruhestellung und einer ausgezogenen Beschattungsstellung relativ zu der Heckscheibenanordnung verlagerbar angeordnet ist, sowie mit einem formstabilen Auszugprofil, das an einem in Auszugrichtung vorderen Stirnendbereich des Beschattungsgebildes angeordnet ist, wobei das Auszugprofil in fahrzeugfesten seitlichen Führungsanordnungen parallel verlagerbar geführt ist, wobei dem Auszugprofil wenigstens zwei unterschiedliche Sichtkonturen zugeordnet sind, die durch Drehung um eine Längsachse des Auszugprofils in unterschiedliche Funktionsstellungen bringbar sind.

Eine derartige Beschattungsvorrichtung ist aus der EP 1 782 979 B1 bekannt. Die bekannte Beschattungsvorrichtung weist ein flexibles Beschattungsgebilde auf, das auf einer Wickelwelle auf- und abwickelbar gehalten ist. Die Wickelwelle ist unterhalb einer Hutablage des Fahrzeuginnenraums drehbar gelagert. In der Hutablage ist ein in Fahrzeugquerrichtung erstreckter Schlitz vorgesehen, durch den das Beschattungsgebilde hindurchtritt, um die Heckscheibe des Kraftfahrzeugs beschatten zu können. An einem in Auszugrichtung vorderen Stirnendbereich ist das Beschattungsgebilde mit einem formstabilen Auszugprofil versehen, das in fahrzeugfest angeordneten seitlichen Führungsanordnungen verlagerbar ist. Die seitlichen Führungsanordnungen erstrecken sich innenraumseitig im Bereich von C-Säulen der Fahrzeugkarosserie und verlaufen zwischen der Ruhestellung des Beschattungsgebildes und der ausgezogenen Beschattungsstellung derart gekrümmt, dass das Auszugprofil im Verlauf dieser Bewegungsbahn um seine Längsachse um etwa 90° verschwenkt. Das Auszugprofil ist mit zwei unterschiedlichen Sichtkonturen versehen, wobei die eine Sichtkontur sich in einer flachen Ausrichtung des Auszugprofils und die andere Sichtkontur sich in einer steilen Ausrichtung des Auszugprofils ergibt. Die in der steilen Ausrichtung wirksame Sichtkontur des Auszugprofils weist einen konvexen Krümmungsabschnitt auf, der einer Dachhimmelkontur nachgeführt ist. In der flachen Ausrichtung verdeckt die Sichtkontur des Auszugprofils den Durchtrittsschlitz in der Hutablage.

Eine weitere Beschattungsvorrichtung ist aus der DE 10 2007 058262 B4 bekannt.

Aufgabe der Erfindung ist es, eine Beschattungsvorrichtung der eingangs genannten Art zu schaffen, die verbesserte Beschattungs- und Abdeckfunktionen ermöglicht.

Diese Aufgabe wird dadurch gelöst, dass das Auszugprofil an gegenüberliegenden Stirnseiten mittels jeweils eines Drehgelenks um die Längsachse relativ zu seitlichen Führungselementen schwenkbar gelagert ist, die in den seitlichen Führungsanordnungen geführt sind. Durch die Schwenkbeweglichkeit des Auszugprofils um eine durch die beiden Drehgelenke definierte Längsachse ergibt sich eine besonders einfache Ausrichtbarkeit des Auszugprofils mit seinen unterschiedlichen Sichtkonturen, ohne dass es auf die Gestaltung und Krümmung der seitlichen Führungsanordnungen ankommt. Erfindungsgemäß ist es vielmehr sogar möglich, die seitlichen Führungsanordnungen über den gesamten Auszugweg des Beschattungsgebildes geradlinig auszurichten und demzufolge in einer gemeinsamen Ebene anzuordnen. Erfindungsgemäß sind die Drehgelenke als Kugelgelenke ausgeführt. Durch die Kugelgelenke werden zudem nichtparallele Ausrichtungen der seitlichen Führungsanordnungen relativ zueinander ausgeglichen, so dass auch eine etwa trapezartig gestaltete Heckscheibe zumindest weitgehend vollständig beschattet werden kann. Die erfindungsgemäße Lösung eignet sich in besonders vorteilhafter Weise für Personenkraftwagen, die mit stark schräggestellten Heckscheiben versehen sind. In vorteilhafter Weise ist das Beschattungsgebilde in der kompakt abgelegten Ruhestellung unterhalb einer Hutablage positioniert. Das kompakte Ablegen des Beschattungsgebildes bedeutet, dass das Beschattungsgebilde zusammengefaltet, zusammengelegt oder aufgewickelt in der Ruhestellung positioniert ist, um relativ wenig Raum zu benötigen. Besonders vorteilhaft ist unter der Hutablage eine Wickelwelle drehbar gelagert, auf der das Beschattungsgebilde auf- und abwickelbar gehalten ist.

In Ausgestaltung der Erfindung greift das Beschattungsgebilde an dem Auszugprofil exzentrisch zu der Längsachse an, um die das Auszugprofil schwenkbar ist. Dadurch übt das Beschattungsgebilde bei einem Ausziehen des Beschattungsgebildes aus der Ruhestellung in die Beschattungsstellung permanent ein Drehmoment auf das Auszugprofil um dessen Längsachse aus, da auf das Beschattungsgebilde eine Rückholkraft wirkt, die zum straffen Spannen des Beschattungsgebildes führt. In besonders vorteilhafter Weise wird die Rückholkraft durch eine Wickelfeder innerhalb der Wickelwelle ausgeübt, die auf das Beschattungsgebilde eine Zugkraft in Aufwickelrichtung bewirkt.

In weiterer Ausgestaltung der Erfindung ist dem Auszugprofil im Bereich der Ruhestellung oder der Beschattungsstellung des Beschattungsgebildes fahrzeugfest ein mechanisches Anschlagmittel zugeordnet, das bei einer Überführung des Beschattungsgebildes in die Ruhestellung oder in die Beschattungsstellung eine Verdrehung der Sichtkonturen in die eine oder andere Funktionsstellung erzwingt. Sobald das Auszugprofil an dem fahrzeugfesten Anschlagmittel zur Anlage kommt, bewirkt das Anschlagmittel eine zwangsläufige Verdrehung des Auszugprofils um dessen Längsachse, wodurch sich das Auszugprofil in eine andere Schwenkstellung ausrichtet als die Stellung, in der das Auszugprofil zwischen der Ruhestellung und der Beschattungsstellung des Beschattungsgebildes geführt wird. Die Verschwenkung aufgrund des Anschlags an dem mechanischen Anschlagmittel erfolgt entgegen dem Drehmoment, das das exzentrische Angreifen des Beschattungsgebildes am Auszugprofil um die Längsachse des Auszugprofils ausübt. Durch die unterschiedlichen Ausrichtungen des Auszugprofils wird je nach Funktionsstellung die eine oder die andere Sichtkontur für eine entsprechende Abdeckung oder Beschattung wirksam. Vorteilhaft ist das mechanische Anschlagmittel im Bereich der Ruhestellung des Beschattungsgebildes vorgesehen und dient dazu, das Auszugprofil so zu verschwenken, dass es einen Durchtrittsschlitz in einer Hutablage für das Beschattungsgebilde abdeckt.

In weiterer Ausgestaltung der Erfindung sind die unterschiedlichen Sichtkonturen am Auszugprofil vorgesehen. Die über die Länge des Auszugprofils erstreckten Außenkonturen bilden demzufolge - je nach Ausrichtung des Auszugprofils und Sichtrichtung von Fahrzeuginsassen aus dem Fahrzeuginnenraum nach unten - die unterschiedlichen Sichtkonturen, die zur Abdeckung eines Sichtspalts zwischen einem Dachhimmel und dem Beschattungsgebilde in der Beschattungsstellung des Beschattungsgebildes und zur Abdeckung eines Durchtrittsschlitzes im Bereich der Hutablage in der Ruhestellung des Beschattungsgebildes dienen können.

Erfindungsgemäß können die unterschiedlichen Sichtkonturen statt am Auszugprofil auch an einer dem Auszugprofil zugeordneten, relativ zum Auszugprofil schwenkbeweglichen Blende vorgesehen sein. Bei dieser Lösung muss das Auszugprofil selbst nicht um seine Längsachse verschwenkbar sein. Denn die für die unterschiedlichen Sichtkonturen notwendige Schwenkbeweglichkeit um eine Längsachse des Auszugprofils erfolgt durch die Blende, die um diese Längsachse schwenkbeweglich am Auszugprofil gelagert ist. Die Abdeck- und Beschattungsfunktionen dieser Blende sind die gleichen wie bei der Ausführung, bei der das Auszugprofil verschwenkbar ist.

In weiterer Ausgestaltung der Erfindung sind die seitlichen Führungselemente durch Führungsschlitten gebildet, die mithilfe von Antriebsgliedern längs der seitlichen Führungsanordnungen verfahrbar sind. Als Antriebsglieder sind vorteilhaft Gewindewellen vorgesehen, die auch als Flexwellen bezeichnet werden, und die drucksteife Antriebsübertragungsglieder bilden.

In weiterer Ausgestaltung der Erfindung ist das Auszugprofil mit einem Mittelprofil und mit seitlichen Teleskopabschnitten versehen, die jeweils stirnseitig koaxial zur Längsachse des Auszugprofils Lagerzapfen aufweisen, die jeweils in das Kugelgelenk eingreifen. Mittels der Lagerzapfen wird die gewünschte Längsachsenverschwenkbarkeit des Auszugprofils erzielt.

In weiterer Ausgestaltung der Erfindung ist jeder Lagerzapfen in dem zugehörigen Kugelgelenk axial gesichert. Dadurch ist gewährleistet, dass eine axiale Verbindung zwischen den gegenüberliegenden Kugelgelenken in den Führungsschlitten und dem Auszugprofil aufrechterhalten bleibt.

In weiterer Ausgestaltung der Erfindung ist die Blende in unbelasteter Stellung durch eine Federanordnung in einer ersten Funktionsstellung gehalten, und die Blende läuft bei einer Überführung des Beschattungsgebildes in die Beschattungsstellung gegen das mechanische Anschlagmittel derart an, dass die Blende in eine gegenüber der ersten Funktionsstellung verschiedene zweite Funktionsstellung verschwenkt wird. Die unterschiedlichen Funktionsstellungen definieren die jeweiligen Sichtkonturen. Die Federanordnung hält die Blende in unbelasteter Stellung definiert positioniert, solange die Blende nicht mit dem mechanischen Anschlagmittel in Kontakt gerät.

In weiterer Ausgestaltung der Erfindung ist eine Sichtkontur des Auszugprofils oder der Blende einer Dachhimmelkontur eines Fahrzeuginnenraums angepasst, insbesondere als konvexe Konturkrümmung gestaltet. Dadurch wird durch die Sichtkontur des Auszugprofils in der entsprechenden Funktionsstellung ein verbleibender Sichtspalt zwischen einem Stirnrand des Beschattungsgebildes und einer Dachhimmelkontur weitgehend verdeckt.

In weiterer Ausgestaltung der Erfindung ist als mechanisches Anschlagmittel jeweils ein im Bereich der jeweiligen seitlichen Führungsanordnung angeordneter Anschlagnocken vorgesehen. Die beiden Anschlagnocken an den gegenüberliegenden seitlichen Führungsanordnungen sind vorteilhaft identisch zueinander gestaltet und identisch zueinander ausgerichtet, um ein synchrones Verschwenken des Auszugprofils oder der Blende zu erzielen, sobald das Auszugprofil oder die Blende an den beiden Anschlagnocken anschlägt.

In weiterer Ausgestaltung der Erfindung sind den seitlichen Führungsanordnungen Zwangsführungsmittel zugeordnet, die im Bereich wenigstens einer Funktionsstellung eine zwangsläufige Verschwenkung des Auszugprofils oder der Blende bewirken. Die Zwangsführungsmittel können in seitlichen Führungsschienensystemen integriert sein, die die seitlichen Führungsanordnungen bilden.

In weiterer Ausgestaltung der Erfindung weisen die Zwangsführungsmittel jeweils eine längs jeder seitlichen Führungsanordnung verlaufende Zwangsführungskulisse sowie jeweils einen in der Zwangsführungskulisse geführten und zu der Längsachse beabstandeten Zwangsführungszapfen auf, der in der jeweiligen Zwangsführungskulisse geführt ist. Die Zwangsführungskulisse verläuft vorzugsweise beabstandet zu der jeweiligen seitlichen Führungsanordnung. Der Zwangsführungszapfen ist in der Zwangsführungskulisse gleit- oder rollbeweglich gelagert. Demzufolge ist der Zwangsführungszapfen nach Art eines Gleitsteines oder nach Art einer Laufrolle gestaltet.

In weiterer Ausgestaltung der Erfindung bildet jede Zwangsführungskulisse im Bereich der Funktionsstellung eine Kurvenbahn, die derart gestaltet ist, dass der Zwangsführungszapfen im Bereich der Kurvenbahn eine Verschwenkung des Auszugprofils oder der Blende bewirkt. Die Kurvenbahn ist vorzugsweise S-förmig ausgeführt, wobei die Kurvenbahn vorteilhaft derart gestaltet ist, dass sie zu ihrem Stirnende hin, das einer entsprechenden Endstellung des Auszugprofils oder der Blende entspricht, von der jeweiligen seitlichen Führungsanordnung weiter entfernt angeordnet ist als in einem Bereich, der in Abstand vor der endseitigen Funktionsstellung positioniert ist.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in perspektivischer Darstellung einen Teil eines Personenkraftwagens im Bereich einer Fahrzeugheckscheibe, der eine Ausführungsform einer erfindungsgemäßen Beschattungsvorrichtung zugeordnet ist,
- Fig. 2: die Darstellung nach Fig. 1 mit der in seine Beschattungsstellung überführten Beschattungsvorrichtung,
- Fig. 3: in vergrößerter, schematischer Schnittdarstellung einen Teilbereich der Beschattungsvorrichtung nach den Fig. 1 und 2,
- Fig. 4: in perspektivischer Darstellung den Teilbereich der Beschattungsvorrichtung nach Fig. 3,
- Fig. 5: in einer weiteren perspektivischen Darstellung die Beschattungsvorrichtung nach den Fig. 1 bis 4,
- Fig. 6: in vergrößerter, teilweise aufgeschnittener Darstellung einen Führungsschlitten der Beschattungsvorrichtung nach Fig. 5,
- Fig. 7a bis 7d: schematisch in einer Seitenansicht verschiedene Funktionsstellungen der Beschattungsvorrichtung nach den Fig. 1 bis 6,
- Fig. 8a und 8b: eine weitere Ausführungsform einer erfindungsgemäßen Beschattungsvorrichtung ähnlich den Fig. 7a bis 7d,
- Fig. 9: eine weitere Ausführungsform einer erfindungsgemäßen Beschattungsvorrichtung in abschnittsweiser, perspektivischer Darstellung,
- Fig. 10: schematisch in einer Seitenansicht die Beschattungsvorrichtung nach Fig. 9 kurz vor Erreichen einer endseitigen Funktionsstellung und
- Fig. 11 bis 14: die Darstellungen nach Fig. 10 in unterschiedlichen Zwischenstellungen in Richtung der endseitigen Funktionsstellung der Beschattungsvorrichtung.

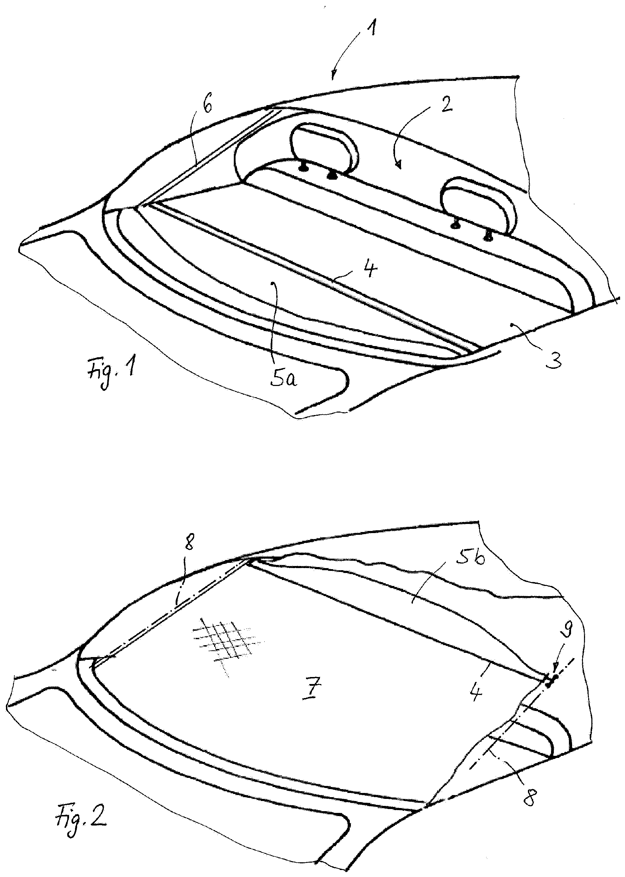

Ein Personenkraftwagen 1 gemäß den Fig. 1 und 2 weist eine Heckscheibenanordnung 2 auf, die einen Fahrzeuginnenraum des Personenkraftwagens 1 heckseitig begrenzt. Im Fahrzeuginnenraum ist unterhalb der Heckscheibenanordnung 2 eine etwa horizontal ausgerichtete Hutablage 3 vorgesehen, die hinter einer Rückenlehnenanordnung einer Fondsitzbank fahrzeugfest positioniert ist.

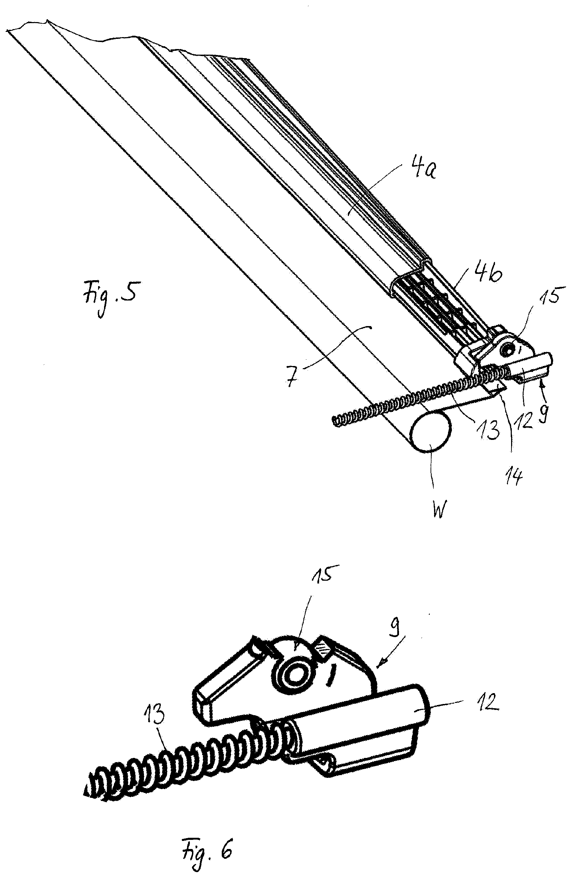

Um die Heckscheibenanordnung 2 beschatten zu können, ist eine Beschattungsvorrichtung vorgesehen, die ein flexibles Beschattungsgebilde 7, insbesondere in Form eines textilen Gewirkes oder Gewebes, umfasst. Das Beschattungsgebilde 7 ist, wie anhand der Fig. 5 bis 7d erkennbar ist, auf einer Wickelwelle W auf- und abwickelbar gehalten. Die Wickelwelle W ist unterhalb der Hutablage 3 mit in Fahrzeugquerrichtung erstreckter Drehachse fahrzeugfest drehbar gelagert. Das Beschattungsgebilde 7 ist zwischen einer auf die Wickelwelle W aufgewickelten Ruhestellung (Fig. 1, 5 und 7d) und einer anhand der Fig. 2 dargestellten Beschattungsstellung verlagerbar, in der das Beschattungsgebilde 7 so im Fahrzeuginnenraum aufgespannt ist, dass die Heckscheibenanordnung 2 - vom Fahrzeuginnenraum aus gesehen - zumindest nahezu vollständig verdeckt ist. An einem in Auszugrichtung vorderen Stirnendbereich ist das Beschattungsgebilde 7 an einem Auszugprofil 4 befestigt, das in Fahrzeugquerrichtung erstreckt ist und an seinen gegenüberliegenden Stirnenden mittels jeweils eines Führungsschlittens 9 in fahrzeugfesten seitlichen Führungsanordnungen 8 zwischen der Ruhestellung des Beschattungsgebildes 7 und der Beschattungsstellung des Beschattungsgebildes 7 parallel verlagerbar ist. Die seitlichen Führungsanordnungen 8 sind im Bereich von C-Säulenabschnitten der Fahrzeugkarosserie angeordnet, wobei sie vorzugsweise im Bereich entsprechender Innenverkleidungsteile vorgesehen sind. Die beiden einander gegenüberliegenden seitlichen Führungsanordnungen 8 definieren jeweils eine geradlinige Führungsspur, so dass diese Führungsspuren in einer gemeinsamen Ebene angeordnet sind. Diese Ebene ist identisch mit der Aufspannebene des Beschattungsgebildes 7.

Das Auszugprofil 4 weist in der Ruhestellung des Beschattungsgebildes 7, in der es auf einem Durchtrittsschlitz im Bereich der Hutablage 3 aufliegt, eine erste, flache Sichtkontur 5a auf. In der Beschattungsstellung des Beschattungsgebildes 7 ist das Auszugprofil 4 gegenüber der Ruhestellung zu einem Dachhimmel hin nach oben verlagert und ist so verdreht, dass das Auszugprofil 4 eine zweite, zu der ersten Sichtkontur unterschiedliche Sichtkontur 5b bildet. In dieser Stellung wird ein verbleibender Sichtspalt zwischen einer Dachhimmelkontur und dem Beschattungsgebilde durch die Stellung des Auszugprofils 4 zumindest nahezu vollständig verdeckt. Hierzu ist das Auszugprofil 4 plattenartig gestaltet und weist eine im Wesentlichen konvexe, über die Länge des Auszugprofils 4 erstreckte Außenkonturierung auf.

Das Beschattungsgebilde 7 weist eine im Wesentlichen rechteckige Fläche auf. Die beiden seitlichen Führungsanordnungen 8 bilden im Bereich entsprechender Innenverkleidungsteile der C-Säulenabschnitte auf gegenüberliegenden Seiten jeweils einen geradlinigen Führungsschlitz 6. Die beiden seitlichen Führungsanordnungen 8 sind nicht-parallel zueinander ausgerichtet, sondern laufen vielmehr - ausgehend von der unteren Ruhestellung des Beschattungsgebildes 7 - nach Art von Trapezschenkeln in Richtung zum Dachhimmel aufeinander zu, symmetrisch zu einer vertikalen Mittellängsebene des Personenkraftwagens 1.

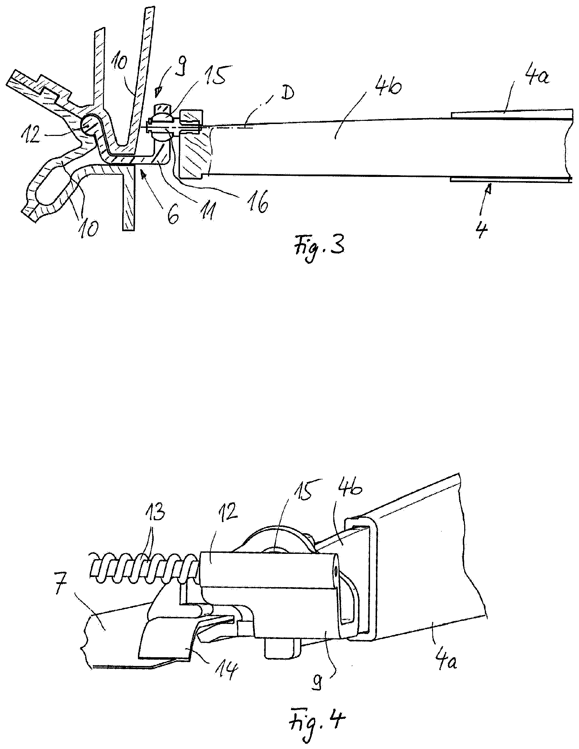

Um das Beschattungsgebilde 7 zwischen der Ruhestellung und der Beschattungsstellung verlagern zu können, sind dem Auszugprofil 4 auf gegenüberliegenden Stirnseiten zwei Führungsschlitten 9 zugeordnet, die in den seitlichen Führungsanordnungen 8 längsverfahrbar sind. Jedem Führungsschlitten 9 ist ein Antriebsmittel in Form einer Flexwelle 13 zugeordnet, die einen drucksteifen Antriebsübertragungsstrang bildet. Die Flexwellen 13 werden in nicht näher dargestellter Weise mittels eines Zahnradgetriebes und eines zentral angeordneten Elektromotors in entsprechenden Führungskanälen von Aufnahmegehäuseabschnitten 10 der seitlichen Führungsanordnungen 8 linearbeweglich geführt. Jede Flexwelle 13 greift im Bereich des zugeordneten Führungsschlittens 9 (siehe Fig. 3 bis 6) an einem Führungsblock 12 des jeweiligen Führungsschlittens 9 an. Der Führungsblock 12 ist in dem entsprechenden Führungskanal der Führungsgehäuseabschnitte 10 der jeweiligen seitlichen Führungsanordnung 8 längsverschiebbar geführt.

Da die seitlichen Führungsanordnungen 8 nicht-parallel zueinander ausgerichtet sind, muss sich zwangsläufig die Länge des Auszugprofils 4 über den Auszugweg des Beschattungsgebildes 7 verändern, um eine gleichbleibende seitliche Führung in den Führungsanordnungen 8 erzielen zu können. Hierzu ist das Auszugprofil 4 mit einem Mittelteil 4a sowie zwei teleskopförmig verschiebbar in dem Mittelteil 4a angeordneten Seitenteilen 4b versehen.

Das Beschattungsgebilde 7 ist mithilfe eines über die Breite des Beschattungsgebildes 7 erstreckten, gegenüber dem Beschattungsgebilde 7 steiferen Stirnbandes 14 an dem Auszugprofil 4 befestigt. Das auch als Querführungsband bezeichnete Stirnband 14 bildet einen Keder, der in eine entsprechende, nicht näher bezeichnete Schlitzaufnahme des Auszugprofils 4 quer eingezogen ist und so eine Fixierung des Beschattungsgebildes 7 über dessen gesamte Breite am Auszugprofil 4 bewirkt.

Das Auszugprofil 4 ist um eine Drehachse D drehbar an den seitlichen Führungsschlitten 9 gelagert. Die Drehachse D erstreckt sich in Längsrichtung des Auszugprofils 4, gemäß Fig. 3 oberhalb einer imaginären Mittellängsachse des Auszugprofils 4. Zur stirnseitigen Lagerung des Auszugprofils 4 ist das Auszugprofil 4 an seinen gegenüberliegenden Stirnenden mit jeweils einem Lagerzapfen 16 versehen, der koaxial zur Drehachse D stirnseitig zur Seite hin abragt (Fig. 3). Der Lagerzapfen 16 ist in einem Kugelgelenk 15 drehbar gelagert, das in dem Führungsschlitten 9 gelagert ist. Die beiden Kugelgelenke 15 auf gegenüberliegenden Seiten des Auszugprofils 4 gewährleisten eine Schwenkbarkeit des Auszugprofils 4 um die Drehachse D trotz der nicht-parallelen Ausrichtung der seitlichen Führungsanordnungen 8, in denen die beiden Führungsschlitten 9 geführt sind. Die Kugelgelenke 15 sind in Trägerabschnitten 11 der Führungsschlitten 9 integriert. Wie anhand der Fig. 3 erkennbar ist, sind die Lagerzapfen 16 an den Teleskopabschnitten 4b des Auszugprofils 4 vorgesehen.

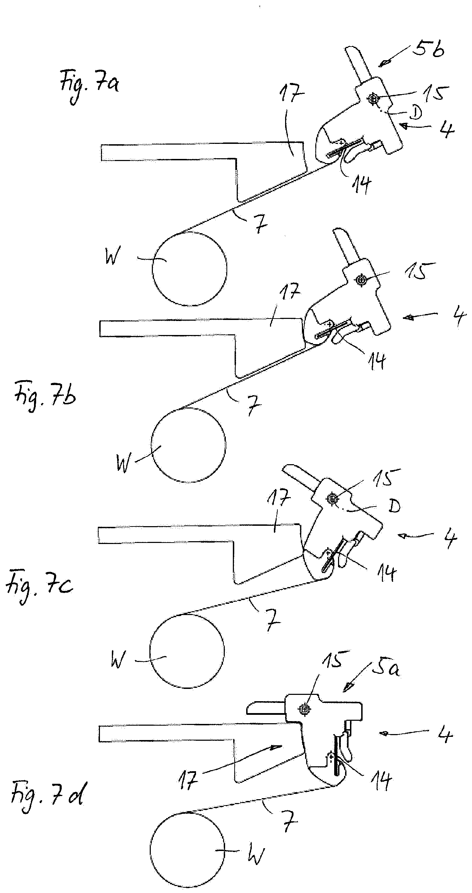

Anhand der Fig. 4, 5 und 7a bis 7d ist erkennbar, dass das Stirnband 14 des Beschattungsgebildes 7 in dem Aufnahmeschlitz des Auszugprofils 4 in Abstand zu der Drehachse D gehalten ist. Die Wickelwelle W wird in Aufwickelrichtung durch eine nicht näher dargestellte Rückholfederanordnung drehmomentbeaufschlagt, so dass das Beschattungsgebilde 7 zwischen dem Auszugprofil 4 und der Wickelwelle W immer gespannt ausgerichtet ist. Die entsprechende Rückholkraft der Rückholfederanordnung bewirkt demzufolge ein permanentes Drehmoment auf das Auszugprofil 4 um die Drehachse D herum, koaxial zu der das Auszugprofil 4 in den seitlichen Führungsschlitten 9 gelagert ist. Dadurch ist das Auszugprofil 4 bei einem Verlagerungsvorgang mittels der Flexwellen 13 zwangsläufig in einer aufrechten Stellung ausgerichtet, wie sie anhand der Fig. 7a und 7b erkennbar ist. In dieser Ausrichtung ist die Sichtkontur 5b wirksam, in der der plattenförmige Abschnitt des Auszugprofils 4 aufrecht nach oben gerichtet ist (siehe Fig. 2).

Kurz vor Erreichen der Ruhestellung des Beschattungsgebildes 7 gerät das Auszugprofil 4 an einem mechanischen Anschlagmittel in Form von wenigstens einem Anschlagnocken 17 zur Anlage, der oberhalb der Bewegungsbahn des Beschattungsgebildes 7 vorgesehen ist. Dadurch erfolgt eine zwangsläufige Verschwenkung des Auszugprofils 4 gemäß den Fig. 7b bis 7d im Gegenuhrzeigersinn, so dass das Auszugprofil 4 nach Erreichen der Ruhestellung (Fig. 7d) flach liegt, d.h. mit flacher Sichtkontur 5a ausgerichtet positioniert ist. Der wenigstens eine Anschlagnocken 17 ist vorzugsweise im Bereich des Durchtrittsschlitzes der Hutablage 3 vorgesehen, so dass das Auszugprofil 4 in flacher Ausrichtung mit der Sichtkontur 5a den Durchtrittsschlitz verdeckt. Um die zwangsläufige Verschwenkung des Auszugprofils 4 zu erleichtern, ist das Auszugprofil 4 mit einer nicht näher bezeichneten Anlaufkontur versehen, die beim Auftreffen auf den wenigstens einen Anschlagnocken 17 mit der komplementären Kontur des Anschlagnockens 17 zusammenwirkt und das Entlanggleiten in die beabsichtigte Schwenkstellung erzielt.

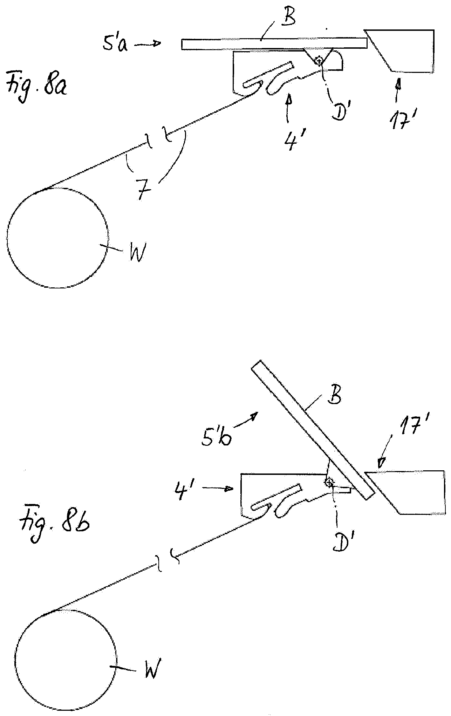

Bei der Ausführungsform nach den Fig. 8a und 8b ist die Beschattungsvorrichtung grundsätzlich in gleicher Weise angeordnet und aufgebaut, wie dies anhand der Ausführungsform gemäß den Fig. 1 bis 7d bereits ausführlich beschrieben wurde. Zur Vermeidung von Wiederholungen wird daher auf die Offenbarung zu der Ausführungsform nach den Fig. 1 bis 7d verwiesen. Identische Teile oder Abschnitte der Beschattungsvorrichtung sind mit gleichen Bezugszeichen versehen. Funktionsgleiche Teile oder Abschnitte sind ebenfalls mit gleichen Bezugszeichen oder Buchstaben, aber unter Hinzufügung eines Strichs "' " versehen. Bei der Ausführungsform nach den Fig. 8a und 8b ist das Beschattungsgebilde 7 an einem Auszugprofil 4' gehalten, das an seitlichen Führungsschlitten nicht drehbar, sondern vielmehr feststehend angeordnet ist. Dem Auszugprofil 4' ist jedoch eine Blende B zugeordnet, die eine konvexe Plattenkonturierung aufweist analog der Konturierung des Auszugprofils 4 gemäß Fig. 2. Die Blende B ist um eine in Längsrichtung des Auszugprofils 4' erstreckte Drehachse D' schwenkbeweglich an dem Auszugprofil 4' gehalten. Die Blende B kann durch eine nicht näher dargestellte Federanordnung in ihrer Ruhelage gehalten sein, in der sie gemäß Fig. 8a flächig auf einer Oberseite des Auszugprofils 4' aufliegt. Die Federanordnung gewährleistet auch ein klapperfreies Aufliegen der Blende B auf dem Auszugprofil 4'. Die Federanordnung kann als Schenkelfeder im Bereich wenigstens eines Lagerpunkts der Blende B auf Höhe der Drehachse D' zwischen Blende B und Auszugprofil 4' wirksam sein. Die Blende B weist einen nicht näher bezeichneten Hebelfortsatz auf, der in Auszugrichtung nach vorne über das Auszugprofil 4' abragt. Im Bereich der Beschattungsstellung für das Beschattungsgebilde 7 ist fahrzeugfest wenigstens ein mechanisches Anschlagmittel 17' vorgesehen, das bei Erreichen der Beschattungsstellung des Auszugprofils 4' die Blende B nach oben aufstellt, wie anhand der Fig. 8b erkennbar ist. Das Aufstellen der Blende B erfolgt zwangsläufig durch ein Anschlagen des Hebelfortsatzes der Blende B an dem als Anschlagnocken gestalteten mechanischen Anschlagmittel 17'. Dadurch definiert die Blende B die aufrecht ausgerichtete Sichtkontur 5'b, sobald die Blende B durch das Anschlagmittel 17' nach oben verschwenkt ist. Durch die Federanordnung wird die Blende B zwangsläufig wieder in die Lage der flachen Sichtkontur 5'a (Fig. 8a) zurückgeschwenkt, sobald das Auszugprofil 4' die Beschattungsstellung wieder verlässt und schräg nach unten abgesenkt wird.

Der Lagerzapfen 16 ist relativ zum Kugelgelenk 15 mittels eines nicht näher bezeichneten Axialsicherungsrings axial gesichert gehalten.

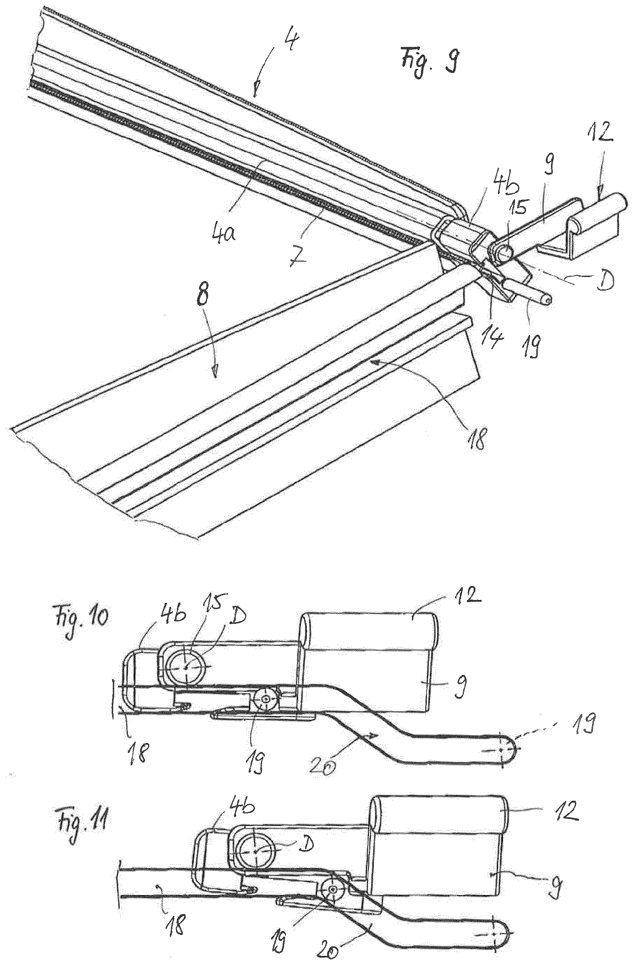

Die Beschattungsvorrichtung nach den Fig. 9 bis 14 entspricht im Wesentlichen der zuvor anhand der Fig. 1 bis 6 und 7a bis 7d beschriebenen Ausführungsform. Zur Vermeidung von Wiederholungen wird daher bezüglich bau- und funktionsgleicher Teile und Abschnitte auf die Beschreibung der Ausführungsformen nach den Fig. 1 bis 7d verwiesen. Funktions- oder baugleiche Teile und Abschnitte sind mit identischen Bezugszeichen versehen. Nachfolgend wird auf die Unterschiede der Beschattungsvorrichtung nach den Fig. 9 bis 14 eingegangen.

Das Auszugprofil 4 der Beschattungsvorrichtung nach den Fig. 9 bis 14 weist einen Mittelteil 4a und zwei Seitenteile 4b auf, die in jeweils einer seitlichen Führungsanordnung 8 geführt sind. Hierzu sind die Seitenteile 4b um eine Drehachse D an jeweils einem Führungsschlitten 9 drehbar gelagert. Die Lagerung des Auszugprofils 4 an dem jeweiligen Führungsschlitten 9 erfolgt mittels jeweils eines Drehgelenks 15. Bei der Ausführungsform nach den Fig. 9 bis 14 sind die gegenüberliegenden seitlichen Führungsanordnungen 8 parallel zueinander ausgerichtet, so dass die Drehgelenke 15 nicht als Kugelgelenke, sondern als einfache Drehgelenke ausgeführt sein können. Bei einer nicht dargestellten Ausführungsform sind die seitlichen Führungsanordnungen 8 nicht-parallel zueinander angeordnet und die Drehgelenke 15 sind als Kugelgelenke gestaltet. Im Übrigen ist bei dieser nicht dargestellten Ausführungsform kein Unterschied zu der Ausführungsform nach den Fig. 9 bis 14.

Jeder Führungsschlitten 9 ist mittels jeweils eines Führungsblockes 12 durch eine nicht dargestellte Gewindewelle angetrieben, die auch als Flexwelle bezeichnet wird und einen drucksteifen Antriebsübertragungsstrang bildet.

Jeder seitlichen Führungsanordnung 8 ist in Abstand unterhalb eines entsprechenden Führungskanals, in dem der Führungsschlitten 9 und der Führungsblock 12 geführt sind, eine Zwangsführungsspur 18 zugeordnet, die in Richtung einer aufgerichteten Endstellung des Auszugprofils 4 in eine Zwangsführungskulisse 20 übergeht. Die Zwangsführungskulisse 20 ist als S-förmige Kurvenbahn gestaltet, deren Stirnendbereich (Fig. 10) parallel zu der Zwangsführungsspur 18, aber in größerem Abstand relativ zum Führungskanal der seitlichen Führungsanordnung 8 ausgerichtet ist.

In der Zwangsführungsspur 18 und der Zwangsführungskulisse 20 ist ein Zwangsführungszapfen 19 gleitbeweglich gelagert, der von einer Stirnseite des Seitenteiles 4b parallel zur Drehachse D seitlich nach außen abragt. In Fig. 10 ist eine Endstellung des Zwangsführungszapfens 19 an dem Stirnendbereich der Zwangsführungskulisse 20 gezeigt.

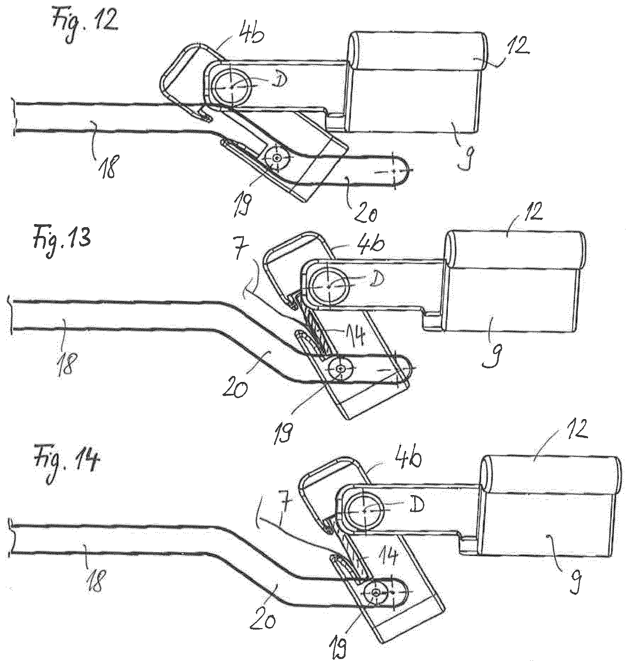

Die Fig. 10 bis 14 lassen auch erkennen, dass der Zwangsführungszapfen 19 relativ zum Drehgelenk 15 an dem Seitenteil 4b außermittig versetzt angeordnet ist, so dass das Auszugprofil 4 im Bereich zur Zwangsführungsspur 18 relativ zur seitlichen Führungsanordnung 8 parallel geführt ist, solange der Zwangsführungszapfen 19 noch nicht die kurvenförmige Zwangsführungskulisse 20 erreicht hat. Sobald der Führungsblock 12 und der Führungsschlitten 9 weiter in Richtung einer endseitigen Funktionsstellung des Auszugprofils 4 verlagert werden, gleitet der Zwangsführungszapfen 19 zwangsläufig in die nach unten gekrümmte Schräge der Zwangsführungskulisse 20 ein, wodurch das Auszugprofil 4 zwangsläufig verschwenkt wird. Dadurch stellt sich das Auszugprofil 4 zwangsläufig auf, wie anhand der Fig. 12 bis 14 gut erkennbar ist. Sobald der Zwangsführungszapfen 19 seine Endstellung in der Zwangsführungskulisse 20 erreicht hat, wird das Auszugprofil 4 vollständig in seine endseitige Funktionsstellung aufgestellt. Bei einer entsprechenden Rückführung des Auszugprofils 4 in entgegengesetzter Richtung ergibt sich zwangsläufig eine umgekehrte Bewegungsabfolge ausgehend von Fig. 14 in Richtung der Fig. 10.

## Patentansprüche

1. Beschattungsvorrichtung für eine Heckscheibenanordnung (2) eines Kraftfahrzeugs mit einem Beschattungsgebilde (7), das zwischen einer kompakt abgelegten Ruhestellung und einer ausgezogenen Beschattungsstellung relativ zu der Heckscheibenanordnung (2) verlagerbar angeordnet ist, sowie mit einem formstabilen Auszugprofil (4, 4'), das an einem in Auszugrichtung vorderen Stirnendbereich des Beschattungsgebildes (7) angeordnet ist, wobei das Auszugprofil (4, 4') in fahrzeugfesten seitlichen Führungsanordnungen (6, 8) parallel verlagerbar geführt ist, wobei dem Auszugprofil (4, 4') wenigstens zwei unterschiedliche Sichtkonturen (5a, 5b; 5'a; 5'b) zugeordnet sind, die durch Drehung um eine Längsachse des Auszugprofils (4, 4') in unterschiedliche Funktionsstellungen bringbar sind, wobei das Auszugprofil (4) an gegenüberliegenden Stirnseiten mittels jeweils eines Drehgelenks (15) um die Längsachse (D) relativ zu seitlichen Führungselementen (9) schwenkbar gelagert ist, die in den seitlichen Führungsanordnungen (6, 8) geführt sind, **dadurch gekennzeichnet, dass** das Drehgelenk (15) als Kugelgelenk gestaltet ist.

2. Beschattungsvorrichtung nach Anspruch 1, **dadurch gekennzeichnet, dass** das Auszugprofil (4) mit einem Mittelprofil (4a) und seitlichen Teleskopabschnitten (4b) versehen ist, die jeweils stirnseitig koaxial zur Längsachse des Auszugprofils (4) Lagerzapfen (16) aufweisen, die jeweils in das Kugelgelenk (15) eingreifen.

3. Beschattungsvorrichtung nach Anspruch 2, **dadurch gekennzeichnet, dass** jeder Lagerzapfen (16) in dem zugehörigen Kugelgelenk (15) axial gesichert ist.

4. Beschattungsvorrichtung für eine Heckscheibenanordnung (2) eines Kraftfahrzeugs mit einem Beschattungsgebilde (7), das zwischen einer kompakt abgelegten Ruhestellung und einer ausgezogenen Beschattungsstellung relativ zu der Heckscheibenanordnung (2) verlagerbar angeordnet ist, sowie mit einem formstabilen Auszugprofil (4'), das an einem in Auszugrichtung vorderen Stirnendbereich des Beschattungsgebildes (7) angeordnet ist, wobei das Auszugprofil (4') in fahrzeugfesten seitlichen Führungsanordnungen (6, 8) parallel verlagerbar geführt ist, wobei dem Auszugprofil (4') wenigstens zwei unterschiedliche Sichtkonturen (5'a, 5'b) zugeordnet sind, die durch Drehung um eine Längsachse des Auszugprofils (4') in unterschiedliche Funktionsstellungen bringbar sind, **dadurch gekennzeichnet, dass** die unterschiedlichen Sichtkonturen (5'a, 5'b) an einer relativ zum Auszugprofil (4') schwenkbeweglichen Blende (B) vorgesehen sind.

5. Beschattungsvorrichtung nach Anspruch 4, **dadurch gekennzeichnet, dass** die Blende (B) in unbelasteter Stellung durch eine Federanordnung in einer ersten Funktionsstellung gehalten ist, und dass die Blende (B) bei einer Überführung des Beschattungsgebildes (7) in die Beschattungsstellung gegen ein mechanisches Anschlagmittel (17') derart anläuft, dass die Blende (B) in eine gegenüber der ersten Funktionsstellung verschiedene zweite Funktionsstellung verschwenkt wird.

6. Beschattungsvorrichtung nach einem der vorhergehenden Ansprüche, **dadurch gekennzeichnet, dass** eine Sichtkontur (5b; 5'b) des Auszugprofils (4) oder der Blende (B) einer Dachhimmelkontur eines Fahrzeuginnenraums angepasst ist, insbesondere als konvexe Konturkrümmung gestaltet ist.

7. Beschattungsvorrichtung nach einem der vorhergehenden Ansprüche, **dadurch gekennzeichnet, dass** als mechanisches Anschlagmittel (17, 17') jeweils ein im Bereich der jeweiligen seitlichen Führungsanordnung (8) angeordneter Anschlagnocken vorgesehen ist.

8. Beschattungsvorrichtung nach Anspruch 4, **dadurch gekennzeichnet, dass** die seitlichen Führungselemente durch Führungsschlitten (9) gebildet sind, die mithilfe von Antriebsgliedern (13) längs der seitlichen Führungsanordnungen (6, 8) verfahrbar sind.

9. Beschattungsvorrichtung nach Anspruch 8, **dadurch gekennzeichnet, dass** den seitlichen Führungsanordnungen (8) Zwangsführungsmittel (18 bis 20) zugeordnet sind, die im Bereich wenigstens einer Funktionsstellung eine zwangsläufige Verschwenkung des Auszugprofils (4, 4a, 4b) oder der Blende bewirken.

10. Beschattungsvorrichtung nach Anspruch 9, **dadurch gekennzeichnet, dass** die Zwangsführungsmittel jeweils eine längs jeder seitlichen Führungsanordnung (8) verlaufende Zwangsführungskulisse (20) sowie jeweils einen in der Zwangsführungskulisse (20) geführten und zu der Längsachse (D) beabstandeten Zwangsführungszapfen (19) aufweisen, der in der jeweiligen Zwangsführungskulisse (20) geführt ist.

11. Beschattungsvorrichtung nach Anspruch 10, **dadurch gekennzeichnet, dass** jede Zwangsführungskulisse (20) im Bereich der Funktionsstellung eine Kurvenbahn bildet, die derart gestaltet ist, dass der Zwangsführungszapfen (19) im Bereich der Kurvenbahn eine Verschwenkung des Auszugprofils (4, 4a, 4b) oder der Blende bewirkt.

## Claims

1. Shading device for a rear window arrangement (2) of a motor vehicle, with a shading structure (7) which is arranged so as to be shiftable relative to the rear window arrangement (2) between a compactly stored inoperative position and an extended shading position, and with a dimensionally stable extension profile (4, 4') which is arranged on an end region, at the front in the extension direction, of the shading structure (7), the extension profile (4, 4') being guided so as to be shiftable in parallel in vehicle-mounted, lateral guide arrangements (6, 8), the extension profile (4, 4') being assigned at least two different visible contours (5a, 5b; 5'a; 5'b) which can be brought into different functional positions by rotation about a longitudinal axis of the extension profile (4, 4'), wherein the extension profile (4) is mounted on opposite end sides by means of a respective hinge joint (15) so as to be pivotable about the longitudinal axis (D) relative to lateral guide elements (9) which are guided in the lateral guide arrangements (6, 8),
**characterized in that**
the hinge joint (15) is a ball and socket joint.

2. Shading device according to claim 1, **characterized in that** the extension profile (4) is provided with a central profile (4a) and lateral telescopic sections (4b) which each have bearing pins (16) on the end side coaxially with respect to the longitudinal axis of the extension profile (4), the bearing pins each engaging in the ball and socket joint (15).

3. Shading device according to claim 2, **characterized in that** each bearing pin (16) is secured axially in the associated ball and socket joint (15).

4. Shading device for a rear window arrangement (2) of a motor vehicle, with a shading structure (7) which is arranged so as to be shiftable relative to the rear window arrangement (2) between a compactly stored inoperative position and an extended shading position, and with a dimensionally stable extension profile (4') which is arranged on an end region, at the front in the extension direction, of the shading structure (7), the extension profile (4') being guided so as to be shiftable in parallel in vehicle-mounted, lateral guide arrangements (6, 8), the extension profile (4') being assigned at least two different visible contours (5'a, 5'b) which can be brought into different functional positions by rotation about a longitudinal axis of the extension profile (4'),
**characterized in that**
the different visible contours (5'a, 5'b) are provided on a panel (B) which is pivotable relative to the extension profile (4').

5. Shading device according to claim 4, **characterized in that** the panel (B), in an unloaded position, is held in a first functional position by a spring arrangement, and **in that**, when the shading structure (7) is transferred into the shading position, the panel (B) runs up against a mechanical stop means (17') in such a manner that the panel (B) is pivoted into a second functional position which is different from the first functional position.

6. Shading device according to any of the preceding claims, **characterized in that** a visible contour (5b; 5'b) of the extension profile (4) or of the panel (B) is adapted to a roof lining contour of a vehicle interior, in particular is configured as a convex contour curvature.

7. Shading device according to any of the preceding claims, **characterized in that** a stop cam arranged in the region of the respective lateral guide arrangement (8) is provided in each case as a mechanical stop means (17, 17').

8. Shading device according to claim 4, **characterized in that** the lateral guide elements are formed by guide carriages (9) which are movable along the lateral guide arrangements (6, 8) with the aid of driving members (13).

9. Shading device according to claim 8, **characterized in that** the lateral guide arrangements (8) are assigned positive guide means (18 to 20), which cause in the region of at least one functional position an inevitable pivoting of the extension profile (4, 4a, 4b) or of the panel.

10. Shading device according to claim 9, **characterized in that** the positive guide means have one respective positive movement guide (20) extending along each lateral guide arrangement (8) and one respective positive guiding pin (19) which is guided in the positive movement guide (20) and spaced from the longitudinal axis (D), which pin is guided in the corresponding positive movement guide (20).

11. Shading device according to claim 10, **characterized in that** each positive movement guide (20) constitutes a curved sector in the region of the functional position, the sector being configured such that the positive guiding pin (19), in the region of the curved sector, causes pivoting of the extension profile (4, 4a, 4b) or the panel.

## Revendications

1. Dispositif d'ombrage pour un arrangement de vitre arrière (2) d'un véhicule automobile avec une structure d'ombrage (7) qui est arrangée de façon déplaçable entre une position de repos compactement entreposée et une position d'ombrage déployée par rapport à l'arrangement de vitre arrière (2), ainsi qu'avec un profilé d'extraction (4, 4') dimensionnellement stable qui est arrangé sur une zone de face avant dans la direction d'extraction de la structure d'ombrage (7), le profilé d'extraction (4, 4') étant guidé dans des arrangements de guidage (6, 8) latéraux fixés au véhicule pour être déplaçable parallèlement, le profilé d'extraction (4, 4') étant associé avec au moins deux contours visibles (5a, 5b ; 5'a ; 5'b) différents qui sont capables d'être amenés vers des positions fonctionnelles différentes par rotation autour d'un axe longitudinal du profilé d'extraction (4, 4'), le profilé d'extraction (4) étant monté sur des faces frontales opposées au moyen d'au moins un joint articulé (15) respectif de façon pivotante autour de l'axe longitudinal (D) par rapport à éléments de guidage (9) latéraux qui sont guidés dans les arrangements de guidage (6, 8) latéraux, **caractérisé en ce que** le joint articulé (15) est configuré sous forme d'articulation sphérique.

2. Dispositif d'ombrage selon la revendication 1, **caractérisé en ce que** le profilé d'extraction (4) est doté d'un profilé central (4a) et des sections télescopiques (4b) latérales, présentant respectivement des tourillons (16) sur la face frontale coaxialement par rapport à l'axe longitudinal du profilé d'extraction (4), les tourillons respectivement s'engageant dans l'articulation sphérique (15).

3. Dispositif d'ombrage selon la revendication 2, **caractérisé en ce que** chaque tourillon (16) est bloqué axialement dans l'articulation sphérique (15) associée.

4. Dispositif d'ombrage pour un arrangement de vitre arrière (2) d'un véhicule automobile avec une structure d'ombrage (7) qui est arrangée de façon déplaçable entre une position de repos compactement entreposée et une position d'ombrage déployée par rapport à l'arrangement de vitre arrière (2), ainsi qu'avec un profilé d'extraction (4') dimensionnellement stable qui est arrangé sur une zone de face avant dans la direction d'extraction de la structure d'ombrage (7), le profilé d'extraction (4') étant guidé dans des arrangements de guidage (6, 8) latéraux fixés au véhicule pour être déplaçable parallèlement, le profilé d'extraction (4') étant associé avec au moins deux contours visibles (5'a, 5'b) différents qui sont capables d'être amenés vers des positions fonctionnelles différentes par rotation autour d'un axe longitudinal du profilé d'extraction (4'), **caractérisé en ce que** les contours visibles (5'a, 5'b) différents sont prévus sur un écran (B) pivotant par rapport au profilé d'extraction (4').

5. Dispositif d'ombrage selon la revendication 4, **caractérisé en ce que** l'écran (B), dans une position non chargée, est retenu dans une première position fonctionnelle par un arrangement de ressort, et **en ce que** l'écran (B), lors du transfert de la structure d'ombrage (7) dans la position d'ombrage, monte vers un moyen de butée (17') mécanique de telle manière que l'écran (B) est pivoté dans une deuxième position fonctionnelle différente de la première position fonctionnelle.

6. Dispositif d'ombrage selon l'une quelconque des revendications précédentes, **caractérisé en ce qu'**un contour visible (5b ; 5'b) du profilé d'extraction (4) ou de l'écran (B) est adapté à un contour de revêtement de toit d'un intérieur de véhicule, en particulier est configuré sous forme de courbure de contour convexe.

7. Dispositif d'ombrage selon l'une quelconque des revendications précédentes, **caractérisé en ce que** comme moyen de butée (17, 17') mécanique est prévu un ergot de butée arrangé respectivement dans la région de l'arrangement de guidage (8) latéral correspondant.

8. Dispositif d'ombrage selon la revendication 4, **caractérisé en ce que** les éléments de guidage latéraux sont configurés sous forme de chariots de guidage (9) mobiles le long des arrangements de guidage (6, 8) latéraux avec l'aide d'organes d'entraînement (13).

9. Dispositif d'ombrage selon la revendication 8, **caractérisé en ce que** les arrangements de guidage (8) latéraux sont associés avec des moyens de guidage positif (18 à 20) provoquant dans la région d'au moins une position fonctionnelle un pivotement par force du profilé d'extraction (4, 4a, 4b) ou de l'écran.

10. Dispositif d'ombrage selon la revendication 9, **caractérisé en ce que** les moyens de guidage positif respectivement présentent une coulisse de guidage positif (20) s'étendant le long de chaque arrangement de guidage (8) latéral ainsi que respectivement un tourillon de guidage positif (19) guidé dans la coulisse de guidage positif (20) et espacé de l'axe longitudinal (D), ledit tourillon étant guidé dans la coulisse de guidage positif (20) correspondante.

11. Dispositif d'ombrage selon la revendication 10, **caractérisé en ce que** chaque coulisse de guidage positif (20) forme un chemin incurvé dans la région de la position fonctionnelle, ledit chemin étant configuré de telle manière que le tourillon de guidage positif (19) produit un pivotement du profilé d'extraction (4, 4a, 4b) ou de l'écran dans la région du chemin incurvé.
